# EUROPEAN PATENT APPLICATION

(11) **EP 1 289 232 A1**
(43) Date of publication of application: **05.03.2003**
(21) Application number: 01921908.8
(22) Date of filing: 19.04.2001
(51) Int. Cl.: H04M 1/00, H04M 1/725

(54) **PORTABLE TELEPHONE BATTERY PACK AND PORTABLE TELEPHONE EQUIPPED WITH THE BATTERY PACK**

(71) Applicant: MITSUBISHI DENKI KABUSHIKI KAISHA, Tokyo 100-8310 (JP)
(72) Inventor: KAWATA, Kaoru, c/o Mitsubishi Denki K.K., Chiyoda-ku, Tokyo 100-8310 (JP); NAKAOKA, Kunio, c/o Mitsubishi Denki K.K., Chiyoda-ku, Tokyo 100-8310 (JP); OKABE, Masashi, c/o Mitsubishi Denki K.K, Chiyoda-ku, Tokyo 100-8310 (JP); ISHIHARA, Yutaka, c/o Mitsubishi Denki K.K., Chiyoda-ku, Tokyo 100-8310 (JP)
(74) Representative: Sajda, Wolf E., Dipl.-Phys.
(86) International application number: JP0103349
(87) International publication number: WO02087196

(57) **Abstract**

The present invention relates to a battery pack (1) for a personal digital assistance such as a mobile telephone, and to a personal digital assistance such as a mobile telephone on which the battery pack (1) is mounted. The present invention incorporates non-telephone functions, for instance, data storing, and audio information reproduction, makes available at least of which even with the battery pack (1) is not connected to the personal digital assistance body, and forms a simple pack (47) by wrapping a storage cell (10) and the protection circuit (11) for the storage cell (10) with an insulation material to form the battery pack (1) by overlaying the simple pack (47) with the upper lid (40).

## Description

### Technical Field

The present invention relates to a battery pack for mobile telephone (hereinafter referred to as a battery pack), and a mobile telephone on which the battery pack is mounted. This telephone incorporates functions other than those provided in a conventional mobile telephone (hereinafter referred to as non-telephone functions) , in addition to the function as a power supply or that for protecting the power supply (hereinafter referred to as a power supply function), and makes available at least part of the non-telephone functions, even if the battery pack is not connected to the mobile telephone body.

### Background Art

Recently, in the field of the personal digital assistance, numerous efforts to increase its essential function or portability have been made, and particularly there is a strong need for downsizing and light weighting of a terminal like a mobile telephone which is always taken along. On the other hand, there is a strong user's demand for multifunction, and in answer to the user's demand, there have been emerged various mobile telephones including, in addition to a mobile telephone incorporated only the conventional phone conversation function, a mobile telephone incorporated additional auxiliary functions such as a scheduling function, and a voice memorandum function, and a mobile telephone incorporated a so-called Internet function. For instance, in the "Portable Telephone with Audio Function," described in JP 10-145470 A, an audio function is incorporated in the mobile telephone body. Further, in JP 7-226807 A, a radio transmitter/receiver provided with a battery pack having an infrared port is described.

However, incorporation of new multifunction into the mobile telephone body not only inhibits an increase of portability required as an essential function, particularly downsizing and light weighting, but also has to design a mobile telephone for each function, so that the incorporation of the multifunction is far from user's satisfactory at present. Further, the above battery pack is to improve the connectivity with external devices while including an infrared port and no reference is made to focusing on functions which are not provided in the conventional mobile telephone. Thus, the above problem has been remained unsolved.

The present invention has been made to solve the above problem, and an object thereof is to provide a battery pack which incorporates non-telephone functions without impairing mobile phone's portability, at least part of which is available even if the battery pack is not connected to the personal digital assistance body, and a mobile telephone on which the battery pack is mounted.

### Disclosure of Invention

The battery pack according to the first structure of the present invention incorporates non-telephone functions together with a power supply. Thus, this battery pack provides functions which cannot be found in the conventional mobile telephone.

The battery pack according to the second structure of the present invention is formed by sandwiching and holding, between its upper and lower lids, a board integrated with the upper lid and having non-telephone function circuit which is mounted on it, and a storage cell. Thus, this battery pack incorporates non-telephone functions with only the upper lid replaced.

The battery pack according to the third structure of the present invention is formed by overlaying a simple pack made by wrapping an insulator around a storage cell and the protection circuit of the storage cell, and the upper lid. Thus, this battery pack is thinned.

The battery pack according to the fourth structure of the present invention has a power supply, and incorporates non-telephone functions at least of which is executable, even if the battery pack is removed from the mobile telephone body. Thus, this battery pack makes available non-telephone functions, with the battery pack removed from the mobile telephone body.

The battery pack according to the fifth structure of the present invention incorporates, as non-telephone functions, a function for storing data transferred from the mobile telephone body or another information terminal in a memory built in the battery pack, or a function for transferring the data stored in the memory to the mobile telephone body or to another information terminal. Thus, this battery pack makes available the function for storing the data transferred from an information terminal, or the function for transferring the data stored in the memory to the mobile telephone body or another information terminal, with battery pack removed from the mobile telephone body.

The battery pack according to the sixth structure of the present invention has a board and a storage cell which are mounted between the upper lid and the lower lid, and a guide for memory card provided on the board, the memory being formed of a memory card. Thus, this battery pack provides the connection between the upper lid and the lower lid by the memory card.

The battery pack according to the seventh structure of the present invention incorporates, as non-telephone functions, a music and voice reproducing function for reproducing and outputting digitized sound information to the outside after converting it into analog data. Thus, this battery pack makes available the sound information reproducing function which is newly incorporated in the battery pack even with the battery pack alone.

The mobile telephone according to the eighth structure of the present invention has mounted thereon the battery pack according to the first structure. Thus, this mobile telephone incorporates a plurality of functions which are conventionally provided in respective independent devices by a single device so as to improve the portability.

### Brief Description of the Drawings

Fig. 1 is a partial perspective view of the battery pack showing the first embodiment of the present invention.
Fig. 2 is a block diagram showing the electrical connection between the mobile telephone body and the battery pack in the first embodiment of the present invention.
Fig. 3 is a block diagram showing the circuit in the battery pack in the first embodiment.
Fig. 4 is a partial perspective view of the battery pack according to the second embodiment of the present invention.
Fig. 5 is block diagram showing the electrical connection in the battery pack in the second embodiment of the present invention.
Fig. 6 is a block diagram showing the signal path between the mobile telephone body and the battery pack in the second embodiment of the present invention.
Fig. 7 is a diagram showing the signal path when an external device is connected to the battery pack in the second embodiment of the present embodiment.
Fig. 8 is a perspective view showing the third embodiment of the present invention.
Fig. 9 is a connection diagram of the battery pack showing the third embodiment of the present invention.
Fig. 10 is an external view of the battery pack showing the second and third embodiments of the present invention, and an external view when it is mounted on the mobile telephone body.
Fig. 11 is a partial perspective and exploded block diagram of the battery pack showing the fourth embodiment of the present invention.
Fig. 12 is a partial perspective view showing the state where the battery pack in the fourth embodiment of the present invention is removed from the telephone body, and the state where it is mounted on the telephone body.
Fig. 13 is a partial perspective and exploded block diagram of the battery pack showing the fifth embodiment of the present invention.
Fig. 14 is a partial perspective view showing the state where the battery pack in the fifth embodiment of the present invention is removed from the telephone body, and the state where it is mounted on the telephone body.
Fig. 15 is a partial perspective and exploded block diagram of the battery pack showing the sixth embodiment of the present invention.

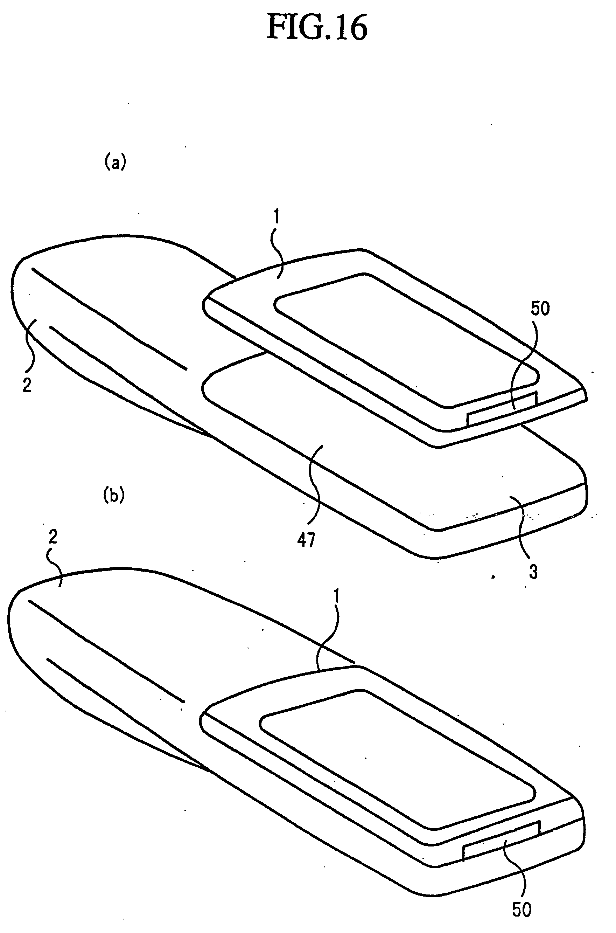

Fig. 16 is a partial perspective view showing the state where the battery pack in the sixth embodiment of the present invention is removed from the telephone body, and the state in which it is mounted on the telephone body.

### Best Mode for Carrying Out the Invention

The basic matters of the present invention are as follows, and the first to sixth embodiments will be described in detail with reference to the accompanying drawings.

In order to provide non-telephone functions without impairing the mobile telephone, these functions are incorporated in a battery pack that has conventionally been a mere power supply so that they can be executable even with the battery pack alone.

An electrical interface between the mobile telephone body or another information terminal, such as data signals, control signals and the like other than the power supply function, enables serial transmission or the like between the battery pack by providing connectors on both sides. Accordingly, the functions, that are required the electrical interface with the device body, are allowed communication with the mobile telephone body or another device through the transmission path.

As the non-telephone functions to be incorporated in the battery pack, various functions are selectable, for instance, a data storage function implemented by a large-capacity memory, a data transfer function, a voice reproducing function, a camera function, a radio reception function, and the like, and incorporates multifunction while affecting as much little effect on the mobile telephone body as possible. To this end, making available at least part of the non-telephone functions, with the battery pack removed from the mobile telephone body, permits the battery pack to be used as a information terminal independent of the mobile telephone.

The following embodiments include a structure in which the battery pack is mounted on the information terminal body, a structure in which the battery pack is removed from the information terminal body and used the battery pack alone, and a structure in which the battery pack is connected to another information terminal such as a PC. They will be described below.

### First Embodiment

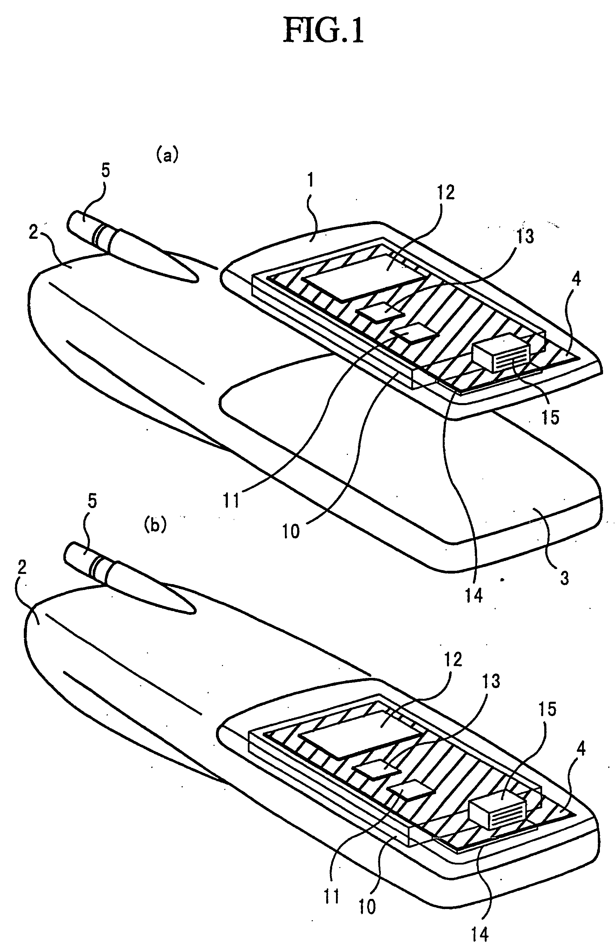

Fig. 1 is a partial perspective view showing the first embodiment of the present invention, in which Fig. 1A is a partial perspective view showing the state where the battery pack is removed from the mobile telephone body, and Fig. 1B is a partial perspective view showing the state where the battery pack is mounted on the mobile telephone body.

This embodiment is directed to an illustration of a specific structure of the battery pack. As shown in Figs. 1A, 1B, the battery pack 1 is removable from the battery pack storage 3 in the mobile telephone body 2. In addition to a lithium-ion secondary storage cell 10 and a storage cell overcharge and over-discharge protection circuit 11, the battery pack 1 includes, as a digital data storage medium, a flash memory 12, which is a nonvolatile IC memory and can be formed by, for instance, a 256-megabit (equivalent to 32-megabyte) device such as M529F25611VP made by Mitsubishi Electric Corporation. A controller 13 mounted on the board 4 for managing transfer and storage of digital data which is mounted on the board 4. A reference numeral 5 denotes an antenna for the mobile telephone. As the controller 13, for instance, a typical 8-bit microcomputer having a serial port, such as M37515 made by Mitsubishi Electric Corp., can be used. Digital data is communicated with the outside of the battery pack through a connector 14 or a serial port 15, and the connector 14 is placed on the side where the battery pack comes into contact with the mobile telephone body, facilitates data transfer. The serial connector 15 is used, for instance, for connection with a PC.

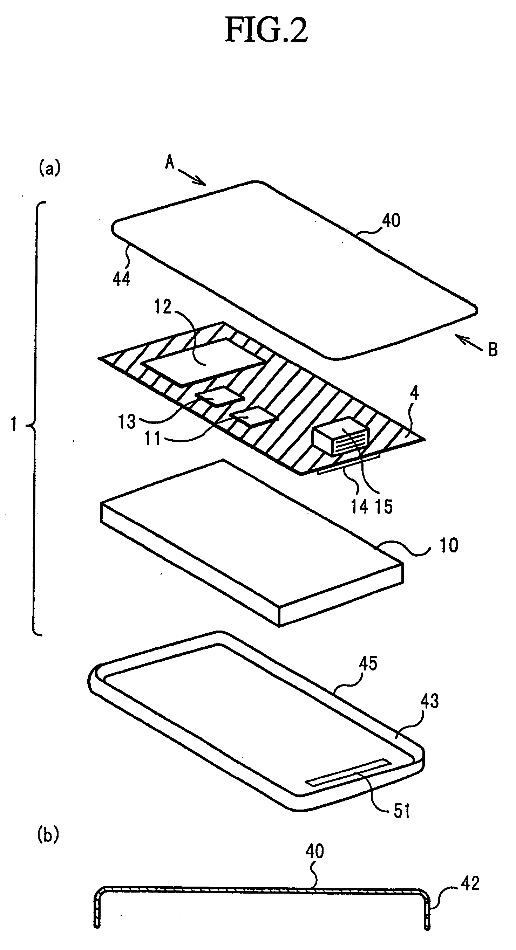

The structure of the battery pack 1 will be described with reference to Fig. 2A, 2B. Fig. 2A is an exploded perspective view of the battery pack 1. Fig. 2B is a cross-sectional view taken along the line A-A of an upper lid 40. The upper lid.40 of the battery pack is formed into a hollow and thin shape, and in a side thereof, a hole 42 forming a space is provided for passing through the connecting cable of an external device to be connected to the serial connector 15. On one surface of the board 4, the storage cell overcharge and over-discharge protection circuit 11, flash memory 12, controller 13, and serial connector 15 are mounted. On the other surface of the board 4, the connector 14 is mounted. A reference numeral 43 denotes a lower lid, in which a rectangular hole 51 is provided to form a space for passing through the pins of a connector 6 in the mobile telephone body 2 when the battery pack 1 is mounted on the mobile telephone body 2. The battery pack 1 is formed by bonding the peripheral portions 44 and 45 of both lids with the lithium-ion secondary storage cell 10 and the boards 4 sandwiched between the thus formed upper lid 40 and the lower lid 43.

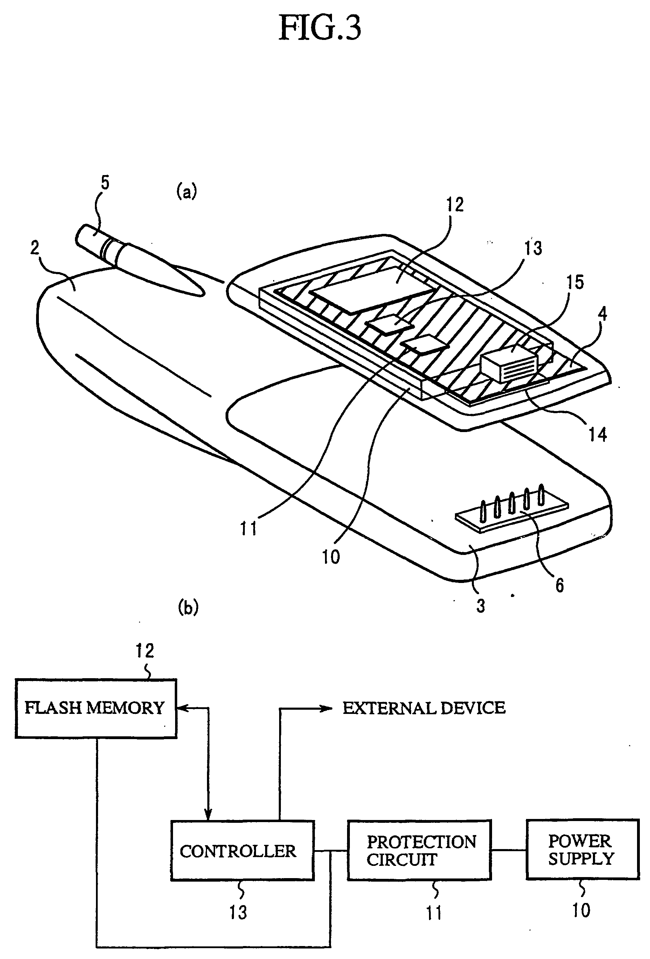

Fig. 3A is a diagram showing the electrical connection between the battery pack 1 and the mobile telephone body 2. As shown in Fig. 3A, by connecting the serial port (not shown) provided in the controller 13 mounted in the battery pack 1 and the serial port (not shown) of the mobile telephone body through the connector 6, data is transferred between the flash memory 12 in the battery pack 1 and the mobile telephone body 2 through the controller 13.

Fig. 3B is a circuit diagram for explaining the circuit configuration in the battery pack. In Fig. 3B, a reference numeral 10 denotes a power supply corresponding to the storage cell, 11 a protection circuit for the power supply 10, and 12 a flash memory, which is connected to the controller 13.

As shown in Fig. 1A, in the state where the battery pack 1 is removed from the mobile telephone body 2, the flash memory 12 can be connected through the serial connector 15 to another device, for instance, a PC, when seeing it logically from the mobile telephone body 2, and can be operated as an external storage device for the PC by software written in the controller 13. Further, the flash memory 12 can be used as a storage medium, for instance, for a digitized communication log, and also as a medium for storing digital sound data directly received from the mobile telephone body 2. Thus, it increases the storage capacity of the mobile telephone body 2.

As an alternative, it can be applied as a medium for backing up, for instance, the address book data in the mobile telephone body 2, and in some cases, it may be applied as a storage medium for software data for giving a new function by rewriting the software executed by the controller in the mobile telephone body 2.

Further, as shown in Fig. 1A, since the battery pack is removable, secret data such as a communication log or address book data, which is kept from person's feelings, and confidential data can be separated from the mobile telephone body 2 and saved in the battery pack 1.

In this case, adapting a proper measure of, for instance, registering in the flash memory 12 mounted in the battery pack 1, a password previously arranged between both the mobile telephone body 2 and the battery pack 1, higher safety can be secured.

In any way, the connector portion for connecting the serial ports of the mobile telephone body and the battery pack takes charge of the data transfer path between them, and no large functional change is required in the mobile telephone body, so it is possible to easily accommodate various functions mounted on a plurality of types of battery packs. Accordingly, diversification of user needs can easily be satisfied.

While, in the first embodiment, the external storage expanding function implemented by mounting the flash memory 12 has been given as an example, other non-telephone functions may be incorporated into the battery pack 1 together with the power supply function.

In the second embodiment, an example is shown, in which a function for recording and reproducing sound information such as compressed music record is incorporated together with the power supply function.

### Second Embodiment

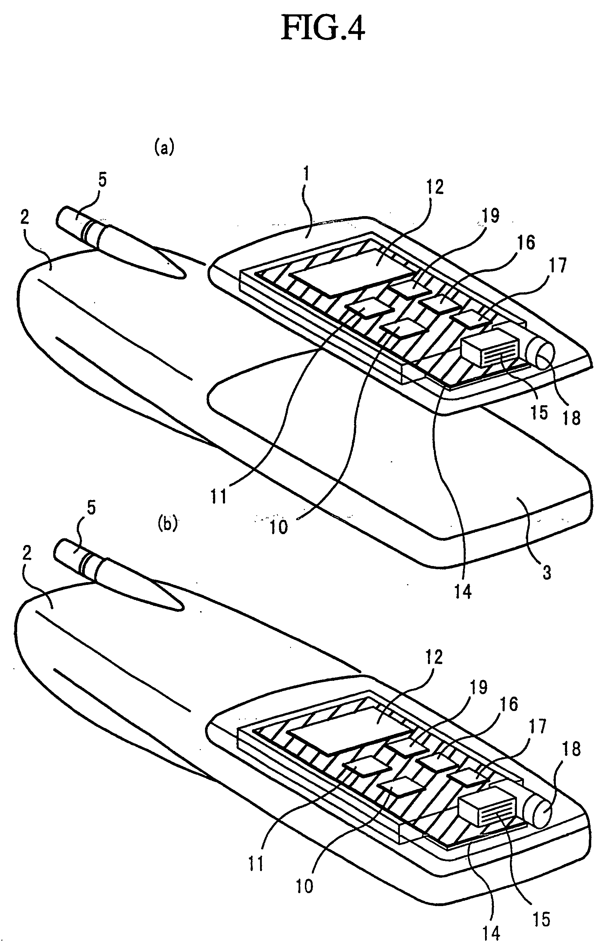

Fig. 4 is a partial perspective view of the battery pack showing the second embodiment of the present invention, which shows a specific structure of the battery pack for mobile telephone, assuming that a mobile telephone as a personal digital assistance, and that the battery pack is removable from the mobile telephone body, as with the first embodiment. Fig. 4A shows the state in which the battery pack 1 is removed from the mobile telephone body 2, and Fig. 4B shows the state in which the battery pack 1 is mounted on the mobile telephone body 2.

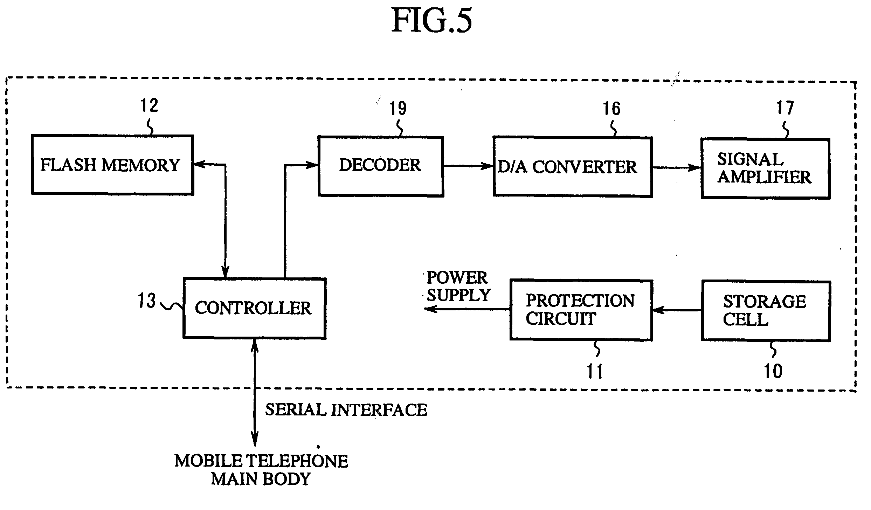

Fig. 5 is a block diagram showing an electrical connection in the battery pack. The electrical connection between the battery pack and the mobile telephone body is the same as the first embodiment shown in Fig. 3A. The battery pack 1 is made by fixing the peripheral portions of the upper lid 40 and the lower lid 43 by bonding each other, with the board 4 and the lithium-ion secondary storage cell 10 sandwiched. On the board 4, as compared with the first embodiment, a D/A converter 16, a signal amplifier 17, a connector 18, and a decoder 19 are further mounted.

In Fig. 5, digital information is stored in the flash memory 12 provided in the battery pack 1, as with the first embodiment. The stored digital information is audio information such as digitized music or voice, and the D/A converter 16 and the signal amplifier 17 for converting the digital information into analog data and outputting it to a headphone or the like, and the connector 18 for connecting a device for converting an electric signal into voice, such as a headphone are provided. Further, since the digitized audio information is subjected to data compression (coding) to reduce the data amount in digitization, the decoder 19 for extending compressed data is mounted.

As the decoder 19, for instance, MAS3507D made by MICRONAS Corp. in Germany can be used. In this case, at least audio data compressed (coded) conformed to the MPEG-1 Layer 3 standard can be extended (decoded) . As the D/A converter and the signal amplifier, for instance, DAC3550A also made by MICRONAS Corp. in Germany can be used. In this IC, the D/A converter function and the signal amplifier function are incorporated in a single IC, so the actual IC is single though there are plurality of function blocks.

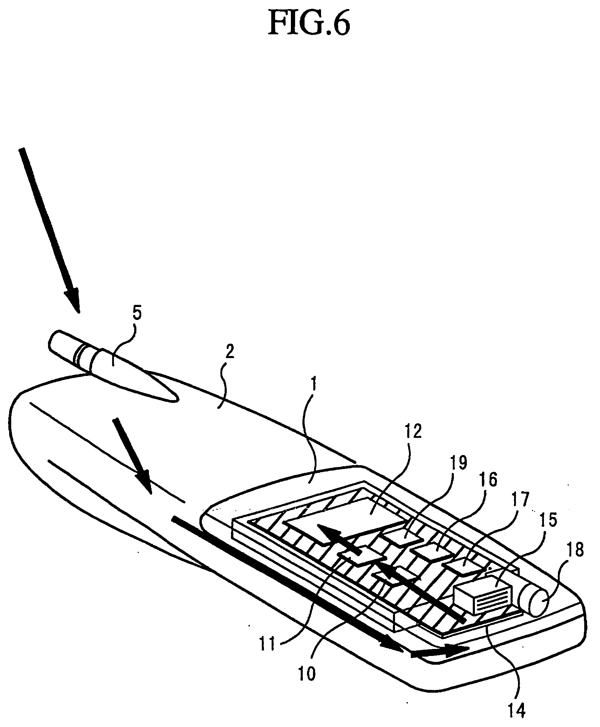

Fig. 6 is a diagram showing the signal path between the battery pack 1 and the mobile telephone body 2. It shows the case where compressed digital music data is downloaded from a mobile telephone line, as an example in which audio data is stored in the flash memory 12 in the battery pack 1. Digital music data is received by the mobile telephone body 2, and transferred from the serial port of the mobile telephone body 2 through the connector 6 to the serial port of the controller 13 in the battery pack 1. The controller 13 can sequentially write music data to the flash memory 12 and save music data in the flash memory.

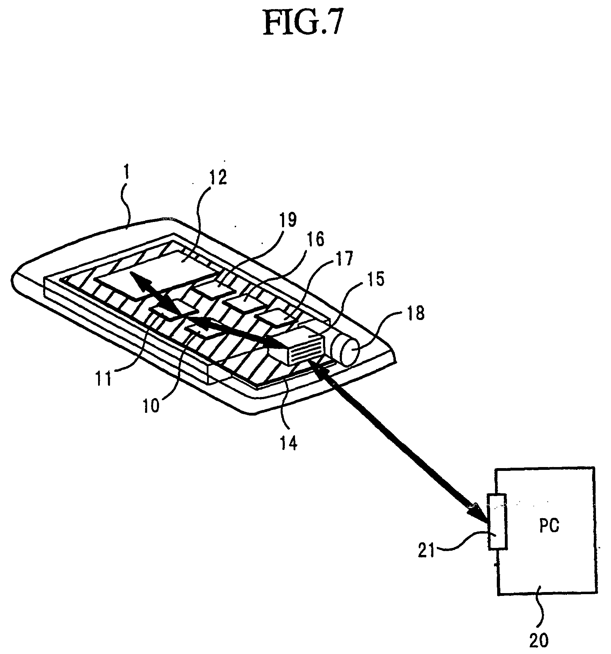

Fig. 7 is a diagram showing the signal path when the battery pack 1 is connected to an external device and a music data stream. It shows the data flow until compressed data is stored in the flash memory 12 in the battery pack 1 from, for instance, a PC 20 as an information terminal other than the mobile telephone. The battery pack 1 is removed from the mobile telephone body 2, and connected with the serial connector 15 for external connection provided in the battery pack 1 to the serial port 21 of the PC 20 through a cable. The data transfer means is the same as Fig. 6.

On the other hand, the digital audio data stored in the flash memory 12 in the battery pack can be respectively transferred by the controller in the battery pack to the mobile telephone body or the PC, upon a request for file transfer from the flash memory in the battery pack made by the mobile telephone or the PC after a connection is made in the same manner.

If the MPEG-1 Layer 3 given above as an example of the voice compression method is used, music data of CD-level sound quality can be stored for about one minute by 1 MB. Thus, for instance, by mounting one flash memory of 256 Mbits (equivalent to 32 MB) such as M5M29F25611VP made by Mitsubishi Electric Corp., as the flash memory 12, a function of recording (storing) about 30-minute music numbers of CD-level sound quality can be implemented.

The compressed music data stored in the flash memory 12 is sent to the decoder 19 in response to an instruction from the controller 13 in the battery pack 1, converted into analog information through the D/A converter and the signal amplifier 17, and reproduced as ordinary music information through a voice converter such as a headphone. The instruction from the controller 13 can be given by transmitting a command specified by pressing a button on the mobile telephone body 2 to the battery pack 1 through the serial port. In this case, it is enough to simply add a function to the mobile telephone body 1 for sending the command, so it can easily be dealt with.

While, in the second embodiment, a connector 18 for connecting a headphone or the like is provided in the battery pack 1, a similar terminal provided in the mobile telephone body 2 may be used. However, in this case, a path is required for transmitting analog music information, which is decoded (extended), passing through the D/A converter, and amplified, to the mobile telephone body 2. For instance, it would be required to provide a connector for transmitting the signal in addition to the serial port connector, or to increase the number of poles of the serial port connector.

### Third Embodiment

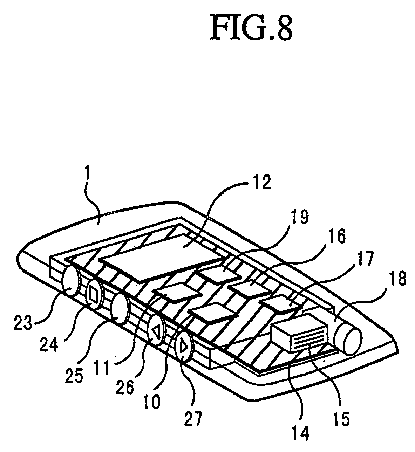

Fig. 8 is a perspective view of the battery pack showing the third embodiment of the present invention. It shows a specific structure of the battery pack for mobile telephone that is the third embodiment of the present invention, assuming that the battery pack 1 incorporates a function for recording and reproducing audio information such as compressed music numbers (audio information reproducing function), as with the second embodiment. In Fig. 8, the included storage cell 10, the flash memory 12, and the like are the same as the second embodiment, excepting that buttons 23-27 for controlling the functions related to music data reproduction is provided in the battery pack 1. The buttons incorporate functions for instructing the controller 13 on the playback, fast-forward, fast-rewind, and stop.

With this structure, the sending of the command related to music data reproduction to the battery pack 1 from the mobile telephone body 2 is eliminated, and the music data reproducing function can be used even with the battery pack alone, without connecting it to the mobile telephone body.

While, in the third embodiment, the case has been shown in which buttons for controlling the commands related to reproduction are provided in the battery pack, a connector may be separately provided in the battery pack and a controller may be provided in the ahead of it. In this case, remote control is permitted within the range in which the cable can play out to its full length, and the operation can be inhibited by removing the controller to ensure safety if important information is contained. An example thereof is shown below.

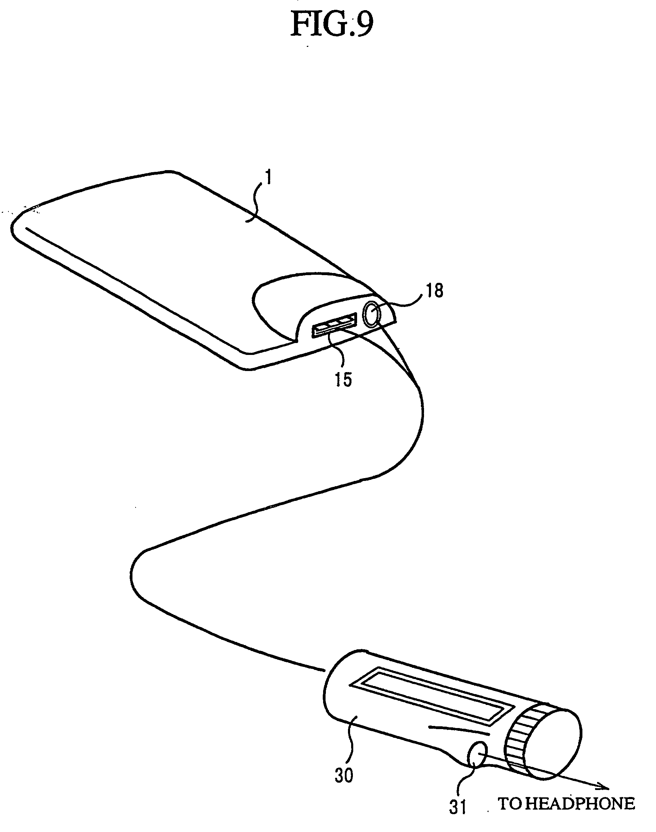

Fig. 9 is a connection diagram of the battery pack showing the third embodiment of the present invention. By increasing the number of poles of the connector 15 for connection to an external device instead of providing a separate connector, connection of a controller 30 to the connector is made possible. A reference numeral 31 denotes a headphone terminal.

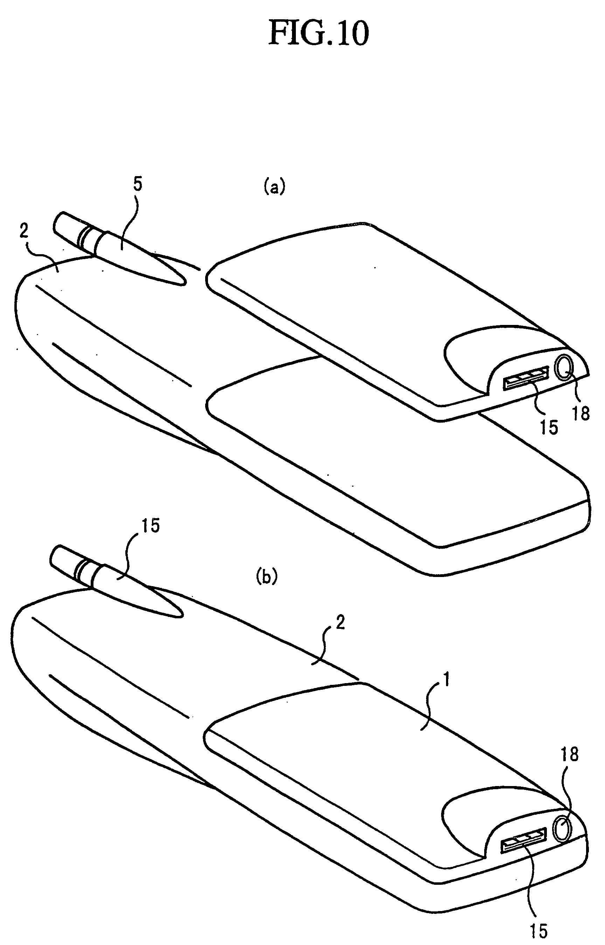

Fig. 10 is an external view of the battery pack showing the second and third embodiments of the present invention, and an external view when it is mounted on the mobile telephone body.

### Fourth Embodiment

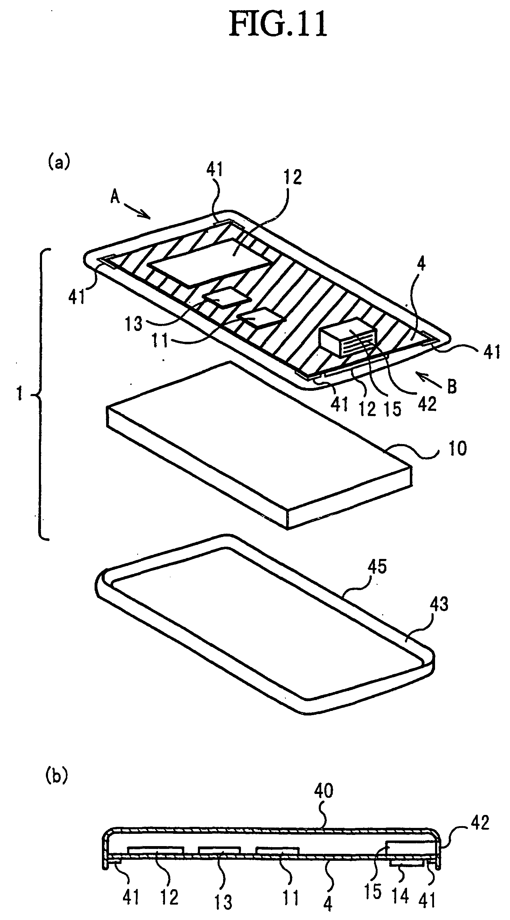

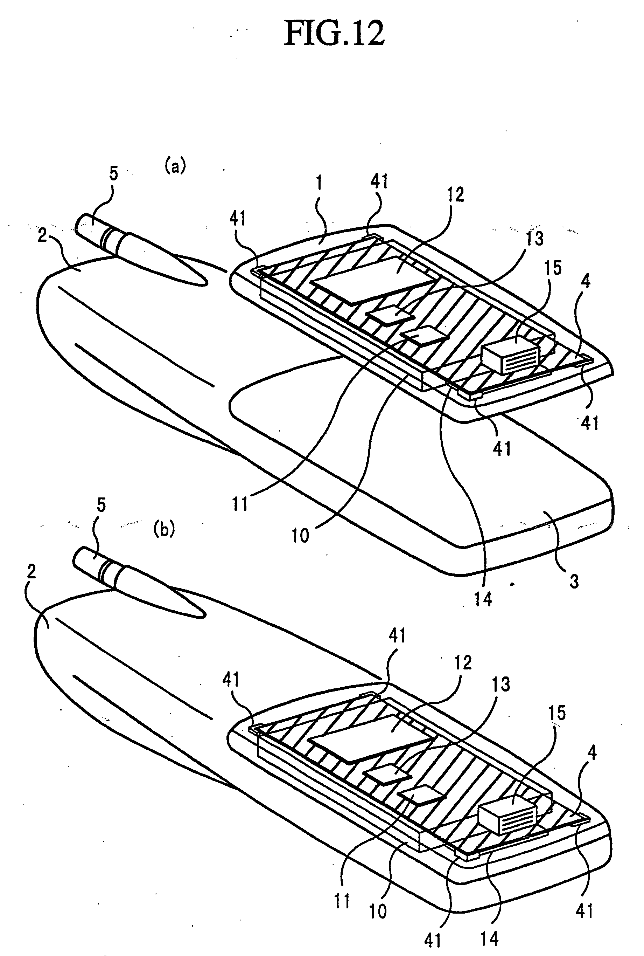

Fig. 11 is a partial perspective and exploded view of the battery pack showing the fourth embodiment of the present invention, in which Fig. 11A is a partially exploded view of the battery pack, showing the upper lid 40 in perspective, and Fig. 11B is a cross-sectional view taken along the line A-B of Fig. 11A. The same reference numerals as those in other embodiments indicate the same or identical portions. In the fourth embodiment, the board 4 is integrated with the upper lid 40 of the battery pack 1. A reference numeral 41 denotes projections for fixing the board 4 to the upper lid 40, which are formed on the inner portions of the upper lid corresponding to the four corners of the board. A reference numeral 42 denotes an opening provided in a side of the upper lid 40 to form a space for passing through the connecting cable of an external device to be connected to the serial connector 15. As shown in Fig. 11B, on the board 4 inside the upper lid 40, the lithium-ion secondary storage cell overcharge and over-discharge protection circuit 11, the flash memory 12, the controller 13, and the serial connector 15 are mounted. On the opposite side of the board 4 (the side opposite to the upper lid side), the connector 14 is mounted. Sandwiching the lithium-ion secondary storage cell 10 between the upper lid 40 and aligning the peripheral portions 44 and 45 of both lids with each other to fixe them with a bonding material, the battery pack 1 shown in Fig. 12 A is formed. A rectangular hole 51 is provided in the lower lid 43 to form a space for passing through the pins 6 on the mobile telephone body 2, with the battery pack 1 mounted on the mobile telephone body 2. The circuit configuration in the battery pack is the same as Fig.3, and the electrical connection between the battery pack 1 and the mobile telephone body 2 is the same as Fig. 2. In addition, with this structure, since the board 4 is integrated with the upper lid 40 of the battery pack 1, non-telephone functions can be implemented by replacing only the upper lid.

Fig. 12A shows the state where the battery pack 1 according to the fourth embodiment is removed from the battery pack storage portion 3 of the mobile telephone body 2. Fig. 12B shows the state where the battery pack 1 is mounted in the battery pack storage portion 3 of the mobile telephone body 2.

### Fifth Embodiment

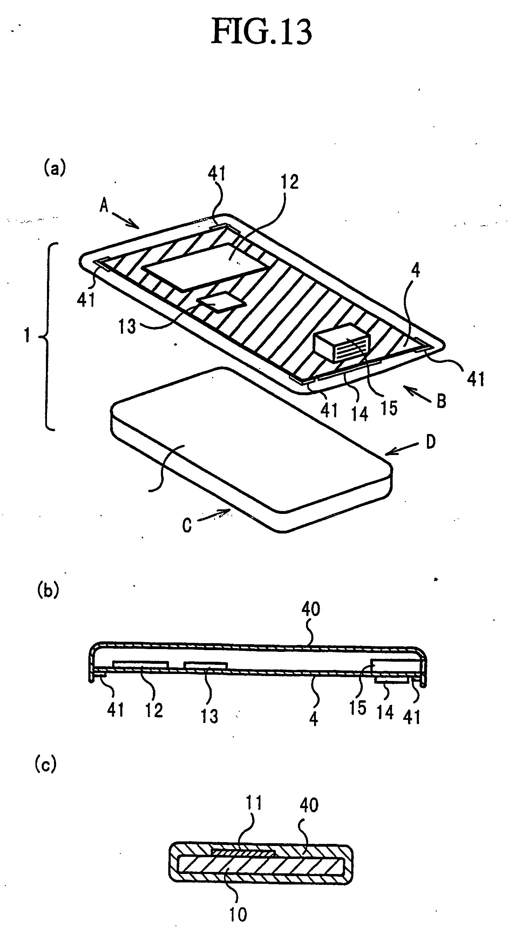

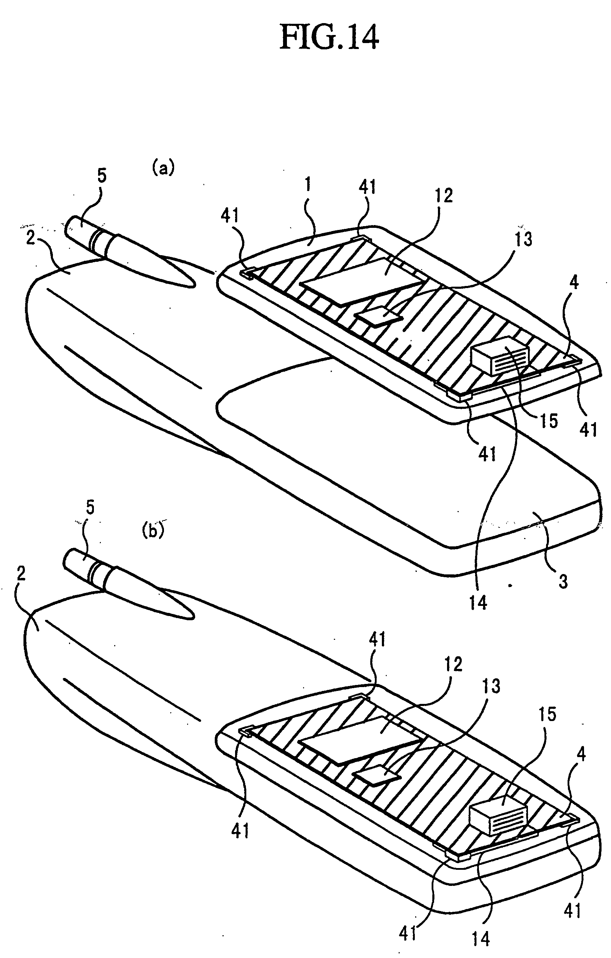

Fig. 13 is a diagram of the battery pack showing the fifth embodiment of the present invention, in which Fig. 13A is an exploded view of the battery pack, where the upper lid 40 is shown in perspective, Fig. 13B is a cross-sectional view taken along the line A-B of Fig. 13A, and Fig. 13C is a cross-sectional view taken along the line C-D of Fig. 13A. In this embodiment, the protection circuit 11 for the lithium-ion secondary storage cell 10 is not formed on the board 4, as shown in Fig. 13B, but it is integrated with the lithium-ion secondary storage cell 10, as shown in Fig. 13C. In Fig. 13C, a simple pack 47 is formed by wrapping an insulation material such as a heat-shrinkable tube 46, with the lithium-ion storage cell 10 and the overcharge/over-discharge protection circuit 11 (the circuit board forming the protection circuit) for the lithium-ion secondary storage cell overlaid, and covering both ends thereof with an insulating board (not shown). The electrodes (not shown) of the lithium-ion storage cell are connected to the power supply terminal (not shown) on the board 4 by cables. The battery pack 1 is formed by overlaying the simple pack 47 and the upper lid 40, and the bottom side of the simple pack 47 also serves as the bottom plate of the battery pack. The electrical circuit in the battery pack 1 has the same structure as that shown in Fig. 3, and the electrical connection between the battery pack 1 and the mobile telephone body 2 is the same as that of Fig. 2. Fig. 14A shows the state where the battery pack 1 is removed from the battery pack storage portion 3 of the mobile telephone body 2. Fig. 14B shows the state where the battery pack 1 is mounted on the battery pack storage portion 3 of the mobile telephone body 2. With such structure, the battery pack 1 can be formed by the upper lid 40 and the simple pack 47, and since the bottom surface of the simple pack forms the lower lid, the battery pack 1 can be thinned and simplified by obviating the lower lid 40.

### Sixth Embodiment

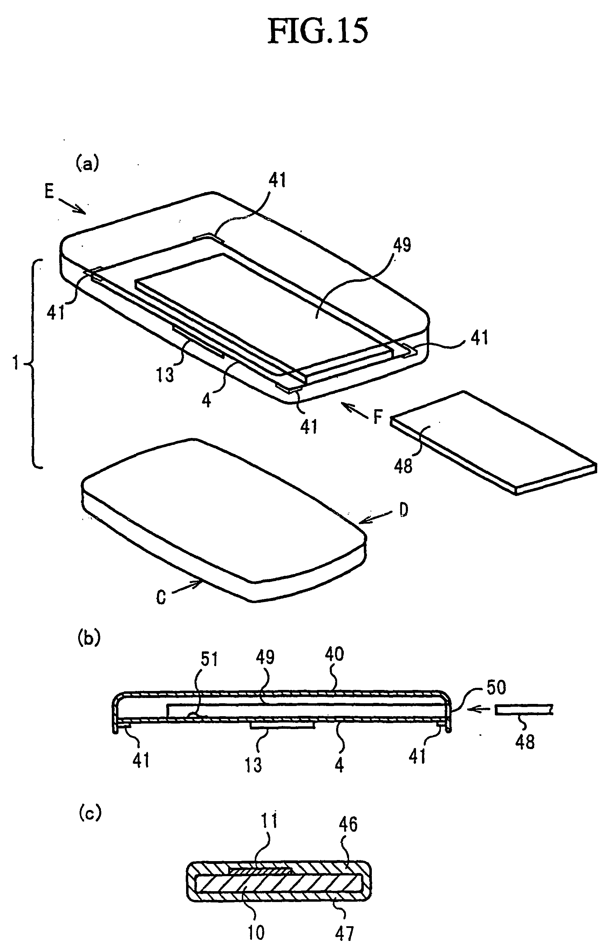

Fig. 15 is a diagram showing the battery pack 1 according to the sixth embodiment of the present invention, in which Fig. 15A is an exploded perspective view showing the upper lid 40 side of the battery pack in perspective, Fig. 15B is a cross-sectional view taken along the line E-F of the upper lid 40 side of Fig. 15A, and Fig. 15C is a cross-sectional view taken along the line C-D of the battery pack 47 in Fig. 15A. The sixth embodiment is the same as the fifth embodiment in that the battery pack 1 is formed of the upper lid 40 side and the simple pack 47, and that the simple pack 47 also has the same structure as the fifth embodiment, excepting that the flash memory 12 on the upper lid 40 side is made up of a removable memory card 48 (for instance, memory stick made by Sony). For use the memory card 48, the structure within the upper lid 40 will be described. As shown in Fig. 15B, a slot-shaped guide 49 is mounted on the board 4 for placing the memory card 48 in the upper lid 40. One end of the guide 49 is in contact with the side end of the upper lid 40, and in the side end of the guide which is in contact with the guide, an opening for loading and unloading the memory card is provided. A reference numeral 51 denotes a resilient fishhook-like connecting pin whose one end is fixed to the bottom surface of the guide 49 and the other end opened, and it contacts with the terminal (not shown) of the memory card 48 inserted into the guide 49 to provide the electrical connection of them. The configuration of the electric circuit in the battery pack 1 is the same as Fig. 3, and the electrical connection between the battery pack 1 and the mobile telephone body 2 is the same as Fig. 2.

According to the sixth embodiment, connection with an external device such as a PC described in other embodiments is accomplished through the memory card rather than the serial connector 15. The same reference numerals employed in the respective embodiments described above indicate the same or identical portions.

While, in the above embodiments, examples have been given, in all of which the electrical connection between the battery pack 1 and the mobile telephone body 2 is made through a connector or a cable, wireless connection may be used instead.

Although the mobile telephone has been described in the above embodiments, the present invention is course be applicable to the so-called PHS.

### Industrial Applicability

The present invention is applicable to a personal digital assistance such as a mobile telephone, and incorporates non-telephone functions, for instance, data storing, voice information reproduction, etc. without impairing portability, and at least part of the non-telephone functions made available with the battery pack alone which is not connected to the personal digital assistance body.

## Claims

1. In a battery pack for personal digital assistance which is connected to the personal digital assistance body as a main operation power supply, incorporating non-telephone functions together with a power supply (10).

2. The battery pack for mobile telephone according to claim 1, wherein said battery pack (1) is formed by sandwiching and holding a board (4) which is integrated with said upper lid (43) and a non-telephone function circuit mounted thereon, and a storage cell (10 between the upper lid (40) and the lower lid (43).

3. The battery pack for personal digital assistance according to claim 1, wherein said battery pack (1) is formed by overlaying a simple pack (47) made by wrapping an insulator around a storage cell (10) and the protection circuit (11) of the storage cell (10), and the upper lid (40).

4. A battery pack for mobile telephone which is connected to the mobile telephone body (2) as a main operation power supply, comprising a power supply (10), and incorporating non-telephone functions at least part of which is executable, even if the battery pack (1) is removed from the mobile telephone body(2).

5. The battery pack for mobile telephone according to claim 1, wherein a memory (10) built in the battery pack (1) incorporates, as non-telephone functions, a function for storing data transferred from the mobile telephone body (2) or another information terminal, or a function for transferring the data stored in said memory (10) to the mobile telephone body (2) or another information terminal.

6. The battery pack for personal digital assistance according to claim 5, wherein said battery pack (1) has a board (4) and a storage cell (10) mounted between the upper lid (40) and the lower lid (43), arid a guide (49) for memory card (48) provided in said board (4), and wherein the memory (10) is formed of a memory card (48).

7. The battery pack for mobile telephone according to claim 1, wherein said battery pack (1) incorporates, as non-telephone functions, an audio information reproducing function for converting digitized audio information into analog data, and for outputting it to the outside.

8. A mobile telephone on which the battery pack (1) for mobile telephone of claim 1 is mounted.
